# EUROPEAN PATENT SPECIFICATION

(11) **EP 0 420 779 B1**
(45) Date of publication and mention of the grant of the patent: **31.01.1996**
(21) Application number: 90480127.1
(22) Date of filing: 29.08.1990
(51) Int. Cl.: H04L 12/54

(54) **User selectable electronic mail management method**
Benutzer wählbares elektronisches Postverwaltungsverfahren
Méthode de gestion du courrier électronique sélectionnable par l'utilisateur

(30) Priority: 25.09.1989 US 411761
(43) Date of publication of application: 03.04.1991
(73) Proprietor: International Business Machines Corporation, Armonk, N.Y. 10504 (US)
(72) Inventor: Dawson, Cherryl A., Grapevine, Texas 76051 (US); Keane, Patrick, Grapevine, Texas 76051 (US)
(74) Representative: de Pena, Alain

(56) References cited:
- EP-A- 0 413 537
- COMPUTER NETWORKS AND ISDN SYSTEMS. vol. 16, no. 1-2, September 1988, AMSTERDAM NL pages 153 - 160; J.CRAIGIE: 'ISO 10021 - X.400(88): A TUTORIAL FOR THOSE FAMILIAR WITH X.400(84)'
- CCITT RECOMMENDATION X.413, FASCICLE VIII.7 14 November 1988, MELBOURNE AU pages 426 - 503; 'MESSAGE HANDLING SYSTEMS: MESSAGE STORE: ABSTRACT-SERVICE DEFINITION.'

## Description

### BACKGROUND OF THE INVENTION

### 1. Technical Field :

The present invention relates in general to the field of computer based communication systems and in particular to the field of so-called "electronic mail" systems. Still more particularly, the present invention relates to methods which permit a computer user to effectively manage received electronic mail items.

### 2. Background Art :

Electronic mail is rapidly supplanting post office mail as a means for communicating between individuals. One significant advantage of electronic mail is that the transmission time associated with electronic messages is ordinarily only seconds or fractions of a second, as compared to post office mail, which ordinarily requires days.

The mailing time associated with post office mail often causes significant delay in the conduct of business and has been largely ignored, and consequently tolerated, until the advent of Express Mail services and electronic mail. Nowadays, this widespread delay of business is identified as a "float" and minimizing or eliminating this float has become one goal of business managers, efficiency experts and others hoping to increase societal productivity.

Electronic mail is one particularly attractive solution to mailing transaction delays; however, several drawbacks must be overcome to enhance the utility of electronic message transmission. One such drawback is the increasing availability of electronic mail transmission capability which has caused a concomitant increase in the volume of electronic mail which must be sorted and dealt with by the recipient. The proliferation of electronic "junk mail" transmitted by facsimile or electronic mail systems has made it necessary to provide a method whereby a mail recipient may effectively manage the volume of mail items received at his or her location.

One such method working with a plurality of mail baskets, is described in EP-A-413537, published 20.2.1991.

### SUMMARY OF THE INVENTION

It is therefore one object of the present invention to provide an improved computer based communication system.

It is another object of the present invention to provide an improved electronic mail system.

It is yet another object of the present invention to provide an improved electronic mail system which permits a computer user to effectively manage received electronic mail items by automatically sorting those mail items by selected properties thereof.

The foregoing objects are achieved as is now described. Each computer user in a multi-user computer based electronic mail distribution system is permitted to graphically establish a plurality of electronic mail "in-baskets," each in-basket having one or more electronic mail properties associated therewith. Each item of electronic mail received is then routed to a selected in-basket in response to the properties associated therewith. In the disclosed embodiment of the present invention, the normal system in-basket is utilized as a default or "no-choice" location for electronic mail which is not routed to a user designated in-basket. In a preferred embodiment of the present invention, user designated in-baskets are arranged in a selected priority order so that electronic mail items which meet more than one in-basket criterion are assigned to the highest priority in-basket during routing. By utilizing the present invention a computer user may sort incoming electronic mail by source, subject matter, type of mail, urgency, security level, or any other easily identifiable property.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein :
Figure 1 is a graphic representation of a computer network which may be utilized in conjunction with the method of the present invention;
Figure 2 depicts a computer screen displaying a graphic representation of the electronic mail management method of the present invention;
Figure 3 is a graphic representation of a computer screen depicting a display of an electronic mail property designation screen which may be utilized in conjunction with the method of the present invention;
Figure 4 is a logic flow chart illustrating the creation and modification of an electronic mail management system in accordance with the method of the present invention; and
Figure 5 is a logic flow chart illustrating the processing of an electronic mail item in accordance with the method of the present invention.

### DETAILED DESCRIPTION OF THE PREFERRED EMBODIMENT

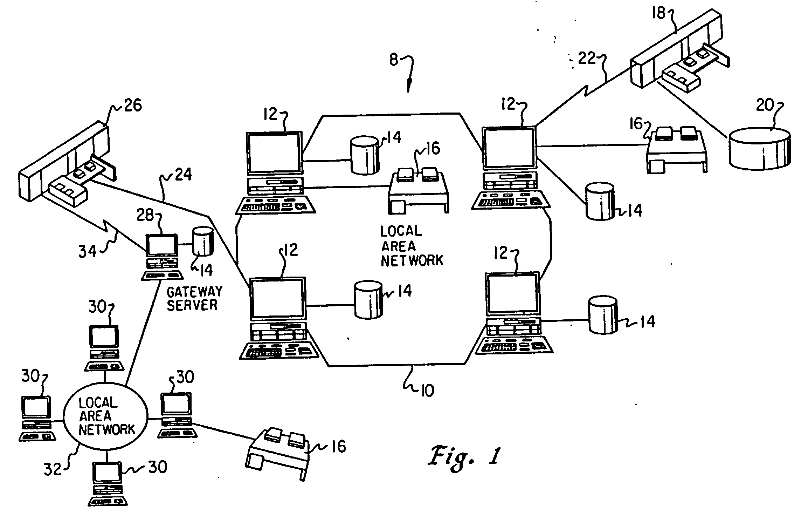

With reference now to the figures, and in particular with reference to Figure 1, there is depicted a pictorial representation of a data processing network 8 which may be utilized to implement the method of the present invention. As may be seen, data processing network 8 may include a plurality of subnetworks, such as Local Area Networks (LAN) 10 and 32, each of which preferably includes a plurality of individual computers 12 and 30, respectively. Of course, those skilled in the art will appreciate that a plurality of Interactive Work Stations (IWS) coupled to a host processor may be utilized for each such network.

As is common in such data processing networks, each individual computer may be coupled to a storage device 14 and/or a printer/output device 16. One or more such storage devices 14 may be utilized, in accordance with the method of the present invention, to store multiple electronic mail items in the electronically designated in-baskets which are created in accordance with the method of the present invention.

Still referring to Figure 1, it may be seen that data processing network 8 may also include multiple main frame computers, such as main frame computer 18, which may be preferably coupled to Local Area Network (LAN) 10 by means of communications link 22. Main frame computer 18 may also be coupled to a storage device 20 which may also serve as remote storage for Local Area Network (LAN) 10. Similarly, Local Area Network (LAN) 10 may be coupled via communications link 24 through a subsystem control unit/communications controller 26 and communications link 34 to a gateway server 28. Gateway server 28 is preferably an individual computer or Interactive Work Station (IWS) which serves to link Local Area Network (LAN) 32 to Local Area Network (LAN) 10 such that electronic mail messages may be easily transmitted and received between individuals within either network.

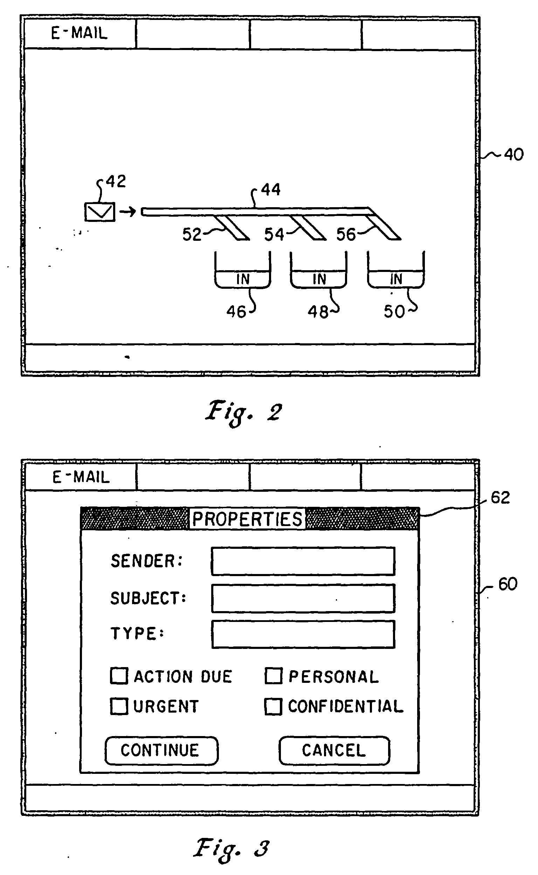

Referring now to Figure 2, there is depicted a computer screen displaying a graphic representation of the electronic mail management method of the present invention. As may be seen, computer screen 40 is utilized to display an iconic graphic representation of the electronic mail management method of the present invention. An item of electronic mail 42 is depicted along with a horizontal bar which corresponds to a mail sorter 44. Incoming electronic mail items travel along mail sorter 44 and flows to the end of mail sorter 44 if no event occurs which stops the mail item. At that point, angled bar 56 represents a mail router which serves to route that item of electronic mail into in-basket 50. Similarly, incoming mail which meets the criteria of mail router 52 or 54 will be routed into in-baskets 46 and 48 respectively.

In this manner, the electronic mail management system of the present invention may easily redirect incoming electronic mail received at an individual computer user's location into any number of electronic in-baskets. Of course, those skilled in the art will appreciate that in-baskets 46, 48, and 50 may be labeled or colored in order to facilitate user discernment of the difference between each in-basket. Alternatively, users who wish to determine the properties associated with a particular in-basket may in one embodiment of the present invention simply select the mail router associated with that in-basket, utilizing a mouse or other pointing device, and request to see the properties associated with that router.

As will be explained in greater detail herein, the position of a particular in-basket within the graphic display contained within computer screen 40 is an important aspect of the present invention. For example, a user who desires to establish a special in-basket containing all confidential mail may also desire a special in-basket containing all mail from his or her manager. The graphic ordering of the in-baskets may be utilized to permit the user to determine into which basket a confidential item of electronic mail from his or her manager will be directed.

In accordance with the electronic mail management method of the present invention, an item of electronic mail will be routed into an electronic mail in-basket which is associated with the first mail router encountered by the item of electronic mail which contains a filter set criteria which is met by that item of electronic mail. Similarly, the one-to-one mapping between mail routers and associated electronic mail in-baskets means that a computer user may define as many in-baskets and associated mail routers as desired. Once an in-basket has been created, an associated router must then be defined in order to install that in-basket into the electronic mail management system of the present invention. Of course, those skilled in the art will appreciate that each electronic in basket/mail router pair may be easily selected and graphically repositioned utilizing any of several graphic computer techniques which are well known in the prior art.

With reference now to Figure 3, there is depicted a graphic representation of a computer screen depicting a display of an electronic mail property designation screen which may be utilized in conjunction with the method of the present invention. As may be seen, electronic mail property designation screen 62 is depicted within computer screen 60. As is evident, a computer user may utilize electronic mail property designation screen 62 to create a mail router filter set or criteria which will be utilized to determine those properties associated with an item of electronic mail which cause that item of electronic mail to be routed into an associated electronic in-basket. As is illustrated, the user may elect to sort electronic mail items by the sender; the subject matter; the type of electronic mail; the urgency of the item or the security level of the item. Additionally, the user may, of course, elect to specify as a filter set or criteria for a mail router a "no-choice" option. By implicitly or explicitly electing the "no-choice" option all mail items will be deposited into the associated in-basket.

Those skilled in the electronic mail art will appreciate that by utilizing property designation screen 62 a computer user may simply and easily direct all items of electronic mail from a particular sender or dealing with a particular subject matter into a selected electronic in-basket. Similarly, the type of electronic mail item may be utilized to sort electronic mail by class or amount of postage associated therewith, making it a simple manner to route all "fourth class" or "junk mail" into an electronic in-basket which may then be periodically purged, after a suitable review. Additionally, this technique may be utilized to route an item of electronic mail to a particular output device, such as a printer, which is most suitable for the level of graphics or textual content contained within the electronic mail item.

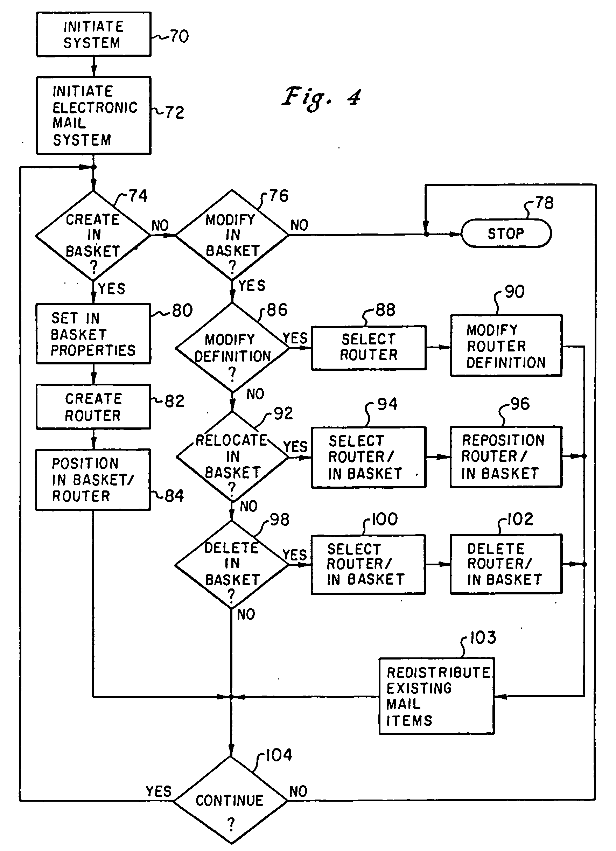

Referring now to Figure 4, there is depicted a logic flow chart illustrating one technique for the creation and modification of an electronic mail management system, in accordance with the method of the present invention. As may be seen, the creation and modification of an electronic mail management system begins at block 70, which illustrates the initiation of the computer system being utilized by the user in question. Next, block 72 depicts the initiation of the electronic mail management system of the present invention. Thereafter block 74 is utilized to illustrate a determination of whether or not the user desires to create an electronic in-basket. In the event the user does not desire to create an electronic in-basket, block 76 depicts a determination of whether or not the user desires to modify an existing electronic in-basket. If no modification or creation is to be attempted, the process passes to block 78 and terminates.

Referring again to block 74, in the event the user does desire to create a new electronic in-basket, the process proceeds to block 80, which illustrates the selection of the filter set properties which will determine which electronic mail items will be permitted to be stored within the designated electronic in-basket. Next, block 82 depicts the creation of a router associated with the newly created electronic in-basket which sets forth these criteria which must be met by an electronic mail item, in order for that electronic mail item to be stored within the electronic in-basket thus created. Finally, block 84 illustrates the positioning of the newly created electronic in-basket and router pair at a desired location along mail sorter 44, as illustrated in Figure 2. At this point, block 104 illustrates a determination of whether or not the user desires to continue. In the event the user desires to continue, the process returns to block 74 to begin again. In the event the user does not desire to continue the process passes to block 78 and terminates, as illustrated therein.

Referring again to block 76, in the event a determination is made that the user desires to modify an electronic in-basket, the process passes to block 86, which illustrates a determination of whether or not the user desires to modify the definition associated with a particular electronic in basket/router pair. If so, the process passes to block 88, which illustrates the selection of the appropriate router. Of course, those skilled in the art will appreciate that this may be accomplished by utilizing an appropriate pointing device or by designating the selected router utilizing keystroke inputs. Next, block 90 depicts the modification of the router definition.

In the event the user does not desire to modify an electronic in basket/router definition, then block 92 illustrates a determination of whether or not the user desires to relocate a selected electronic in-basket. If so, block 94 depicts the selection of the appropriate electronic in basket/router pair and thereafter block 96 illustrates the repositioning of that electronic in basket/router pair in accordance with the desires of the user. Again, those skilled in the art will appreciate that well known graphic pointing devices may be utilized to accomplish this repositioning.

Finally, in the event the user does not desire to relocate an electronic in-basket, or modify the definition of an electronic in-basket, block 98 illustrates a determination of whether or not the user desires to delete a particular electronic in-basket. If so, the process passes to block 100, which illustrates the selection of the appropriate electronic in basket/router pair. Next, block 102 depicts the deletion of the designated electronic in basket/router pair.

After either modifying a router definition, as illustrated in block 90, or repositioning a electronic in basket/router pair, as depicted in block 96 or deleting a electronic in basket/router pair as illustrated in block 102, the process passes to block 103, wherein existing electronic mail items are redistributed, in accordance with the modified status of the electronic in basket/router pairs within the system. This of course is necessary due to the fact that an item of electronic mail may now need to be associated with a different electronic in-basket, due to modifications in the definition or position of an electronic in-baskets. Thereafter, the process again passes to block 104 to determine whether or not the user desires to continue. As above, if the user desires to continue, the process returns to block 74, to once again begin the sequence necessary to create a new electronic in-basket or modify an existing electronic in-basket. In the event the user does not desire to continue, the process passes to block 78 and terminates.

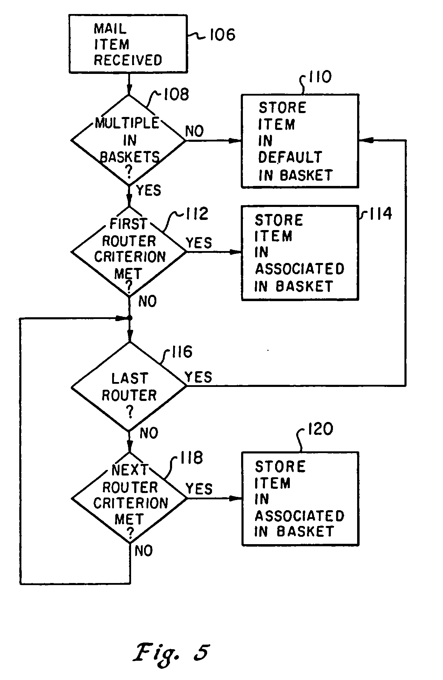

Finally, with reference to Figure 5, there is depicted a logic flow chart illustrating the processing of an electronic mail item in accordance with the method of the present invention. As may be seen, the process begins as illustrated in block 106, with the receipt of a selected electronic mail item. Thereafter, block 108 is utilized to determine whether or not the user in question has elected to utilize multiple electronic in-baskets. If not, block 110 illustrates the storing of the electronic mail item in the default in-basket, which is provided by the normal electronic mail system. However, if the determination illustrated in block 108 indicates that multiple electronic in-baskets have been selected, block 112 depicts a determination of whether or not the criterion associated with the first router has been met. If so, the electronic mail item is then stored in the electronic in-basket associated with the first router, as depicted in block 114.

In the event the criteria associated with the first router within a multiple in-basket system has not been met, then block 116 illustrates a determination of whether or not the last router has been encountered. If so, as illustrated with regard to Figure 2, the electronic mail item is stored within the default in-basket associated with the normal electronic mail processing system, as depicted in block 110, or in a "no-choice" in-basket established for this purpose.

In the event the last router within the mail management system has not been encountered, then block 118 depicts a determination of whether or not the next router criterion has been met. If so, the electronic mail item meeting that criterion is stored in the electronic in-basket associated with this router. In the event the next router criterion has not been met, the system recursively returns to block 116 to determine whether or not a successive electronic mail router must be processed. In this manner, each item of electronic mail received by a user will be processed to determine whether or not it should be placed in any one of a plurality of electronic mail in-baskets which may be created by the user to meet his or her personal needs.

Those skilled in the art will appreciate upon reference to the foregoing that the Applicants have provided herein a novel electronic mail management system which permits an individual computer user to graphically sort incoming electronic mail items according to a filtering criteria which includes an implied priority by position. In this manner, a particular computer user may effectively avoid the burden of reviewing large numbers of unimportant electronic mail items while permitting rapid and efficient access to electronic mail items which meet selected criteria set by that user.

While the invention has been particularly shown and described with reference to a preferred embodiment, it will be understood by those skilled in the art that various changes in form and detail may be made therein without departing from the scope of the invention, which is defined by the claims.

## Claims

1. An electronic mail management method for use by an individual computer user in a multi-user computer based electronic mail distribution network (8) made up of a plurality of individual computer user stations (12, 30), said method comprising the steps of:
- establishing (74) in at least one of said individual computer stations a plurality of electronic mail in baskets (46, 48, 50),
- associating (80) selected electronic mail properties with each of said electronic mail in baskets, said selected electronic mail properties comprising an indication of the security level of an item of electronic mail, and
- routing (44, 52, 54, 56, 110, 114, 120) received items of electronic mail (42) into said electronic mail in-baskets in response (112, 118) to properties associated with each item of electronic mail.

2. The method of Claim 1 wherein said selected electronic mail properties further comprise an indication of the sender of an item of electronic mail.

3. The method of Claim 1 or 2 wherein said selected electronic mail properties further comprise an indication of the subject matter of an item of electronic mail.

4. The method of any of the claims 1 to 3 wherein said selected electronic mail properties further comprise an indication of the class of an item of electronic mail.

5. The method of any of the claims 1 to 4, further comprising the steps of:
- ordering said electronic mail in-baskets in a selected priority order, and
- routing received electronic mail into said electronic mail in-baskets in response to properties associated with each item of electronic mail, in said selected priority order.

6. The method of any of the claims 1 to 5, wherein said at least one of said individual computer stations comprises a computer screen (40) utilized to display an iconic graphic representation including said item of electronic mail (42) depicted along a horizontal bar corresponding to a mail sorter (44), with angled bars (52, 54, 56) representing mail routers into said plurality of electronic mail in-baskets (46, 48, 50).

7. The method of claim 6 wherein said plurality of electronic mail in-baskets (46, 48, 50) are colored in order to facilitate user discernment of the difference between each said electronic mail in-baskets.

8. The method of claim 6 or 7, wherein said at least one of said individual computer stations further comprises a pointing device on said screen, allowing a user to select and determine said selected properties associated with a particular electronic mail in-basket.

## Patentansprüche

1. Verfahren zur Verwaltung elektronischer Post zur Verwendung durch einen einzelnen Computernutzer in einem computerbasierten Mehrbenutzer-Verteilernetz für elektronische Post (8), das aus einer Vielzahl einzelner Computernutzerstationen (12, 30) besteht, wobei das Verfahren die folgenden Schritte umfaßt:
- Einrichten (74) einer Vielzahl von Eingangskörben für elektronische Post (46, 48, 60) in mindestens einer der einzelnen Computerstationen,
- Zuordnen (80) ausgewählter Merkmale der elektronischen Post zu jedem der Eingangskörbe für elektronische Post, wobei die ausgewählten Merkmale der elektronischen Post eine Anzeige der Sicherheitsstufe einer elektronischen Postsendung umfassen, und
- Weiterleiten (44, 52, 54, 56, 110, 114, 120) empfangener elektronischer Postsendungen (42) in die Eingangskörbe für elektronische Post in Abhängigkeit (112, 118) von den Merkmalen, die jedem Element der elektronischen Post zugeordnet sind.

2. Verfahren nach Anspruch 1, wobei die ausgewählten Merkmale der elektronischen Post weiterhin eine Anzeige des Absenders einer elektronischen Postsendung umfassen.

3. Verfahren nach Anspruch 1 oder 2, wobei die ausgewählten Merkmale der elektronischen Post weiterhin eine Anzeige des Gegenstandes einer elektronischen Postsendung umfassen.

4. Verfahren nach irgendeinem der Ansprüche 1 bis 3, wobei die ausgewählten Merkmale der elektronischen Post weiterhin eine Anzeige der Klasse einer elektronischen Postsendung umfassen.

5. Verfahren nach irgendeinem der Ansprüche 1 bis 4, das weiterhin die folgenden Schritte umfaßt:
- Ordnen der Eingangskörbe für elektronische Post in einer ausgewählten Prioritätsreihenfolge, und
- Weiterleiten empfangener elektronischer Post in der ausgewählten Prioritätsreihenfolge in die Eingangskörbe für elektronische Post in Abhängigkeit von Merkmalen, die jedem Element der elektronischen Post zugeordnet sind.

6. Verfahren nach irgendeinem der Ansprüche 1 bis 5, wobei die mindestens eine der einzelnen Computerstationen einen Computerbildschirm (40) umfaßt, der verwendet wird, um eine symbolhafte grafische Darstellung einschließlich der elektronischen Postsendung (42) anzuzeigen, die mit einem horizontalen Balken dargestellt ist, der einem Postsortierer (44) entspricht, wobei abgewinkelte Balken (52, 54, 56) die Postleiter in die Vielzahl der Eingangskörbe für elektronische Post (46, 48, 50) darstellen.

7. Verfahren nach Anspruch 6, wobei die Vielzahl der Eingangskörbe für elektronische Post (46, 48, 50) farbig ist, um die Wahrnehmung des Unterschiedes zwischen jedem der Eingangskörbe für elektronische Post durch den Nutzer zu erleichtern.

8. Verfahren nach Anspruch 6 oder 7, wobei die mindestens eine der einzelnen Computerstationen weiterhin ein Zeigegerät auf dem Bildschirm umfaßt, das einem Nutzer gestattet, die ausgewählten Merkmale, die einem speziellen Eingangskorb für elektronische Post zugeordnet sind, auszuwählen und zu bestimmen.

## Revendications

1. Procédé de gestion de courrier électronique pour l'utilisation par un utilisateur d'ordinateur individuel dans un réseau (8) de distribution de courrier électronique à base d'ordinateur à utilisateurs multiples constitué d'une pluralité de postes (12, 30) d'utilisateurs d'ordinateurs individuels, ledit procédé comprenant les étapes suivantes:
- établissement (74) dans au moins l'un desdits postes d'ordinateurs individuels d'une pluralité de corbeilles d'entrée (46, 48, 50) de courrier électronique,
- association (80) de propriétés sélectionnées du courrier électronique avec chacune desdites corbeilles d'entrée de courrier électronique, lesdites propriétés sélectionnées de courrier électronique comprenant une indication du niveau de sécurité d'un élément du courrier électronique, et
- transfert (44, 52, 54, 56, 110, 114, 120) d'éléments reçus du courrier électronique (42) dans lesdites corbeilles d'entrée du courrier électronique en réponse (112, 118) aux propriétés associées avec chaque élément du courrier électronique.

2. Procédé selon la revendication 1, dans lequel lesdites propriétés sélectionnées du courrier électronique comprennent en outre une indication de l'expéditeur d'un élément du courrier électronique.

3. Procédé selon la revendication 1 ou 2, dans lequel lesdites propriétés sélectionnées du courrier électronique comprennent en outre une indication du sujet traité d'un élément du courrier électronique.

4. Procédé selon l'une quelconque des revendications 1 à 3, dans lequel lesdites propriétés sélectionnées du courrier électronique comprennent en outre une indication de la classe d'un élément du courrier électronique.

5. Procédé selon l'une quelconque des revendications 1 à 4, comprenant en outre les étapes suivantes:
- ordonnancement desdites corbeilles d'entrée du courrier électronique selon un ordre de priorité sélectionné, et
- transfert du courrier électronique reçu dans lesdites corbeilles d'entrée du courrier électronique en réponse aux propriétés associées avec chaque élément du courrier électronique, dans ledit ordre de priorité sélectionné.

6. Procédé selon l'une quelconque des revendications 1 à 5, dans lequel au moins l'un desdits postes d'ordinateurs individuels comprend un écran (40) d'ordinateur utilisé pour afficher une représentation graphique iconographique comportant ledit élément du courrier électronique (42) représenté le long d'une barre horizontale correspondant à un dispositif (44) de tri de courrier, avec des barres (52, 54, 56) formant des angle représentant des dispositifs de transfert du courrier dans ladite pluralité de corbeilles d'entrée (46, 48, 50) du courrier électronique.

7. Procédé selon la revendication 6, dans lequel ladite pluralité de corbeilles d'entrée (46, 48, 50) du courrier électronique sont colorées afin de faciliter le discernement de l'utilisateur de la différence entre chacune desdites corbeilles d'entrée du courrier électronique.

8. Procédé selon la revendication 6 ou 7, dans lequel ledit au moins un poste d'ordinateur individuel comprend en outre un dispositif de pointage sur ledit écran, permettant à un utilisateur de sélectionner et de déterminer lesdites propriétés sélectionnées associées avec une corbeille d'entrée particulière du courrier électronique.
